# DEMANDE DE BREVET EUROPEEN

(11) **EP 1 666 756 A1**
(43) Date de publication de la demande: **07.06.2006**
(21) Numéro de dépôt: 05300991.6
(22) Date de dépôt: 02.12.2005
(51) Int. Cl.: F16D 66/02, F16D 66/00, F16D 65/10, F16D 65/12

(54) **Contrôle visuel de l'état d'usure d'un tambour de frein**

(30) Priorité: 03.12.2004 FR 0452851
(71) Demandeur: Renault, 92109 Boulogne Billancourt (FR)
(72) Inventeur: GILLOT, Daniel, 78960, VOISINS LES BRETONNEUX (FR); GEY, Yves, 72230, GUECELARD (FR)

(57) **Abrégé**

Dispositif de freinage comportant au moins un rotor de freinage (1), un élément de friction (3), et des moyens d'application appropriés permettant, lors d'une action de freinage, la mise en contact de l'élément de friction (3) avec une surface (5) du rotor (1), le dispositif de freinage comprenant en outre des moyens appropriés pour l'ajustement de la course de l'élément de friction (3) en fonction de l'état d'usure du matériau de friction constituant l'élément (3), le dispositif de freinage comportant également au moins un élément de protection (4) destiné notamment à assurer l'étanchéité du dispositif de freinage, caractérisé en ce que le rotor de freinage (1) comporte, dans un élément de volume délimité par au moins une partie de la surface (5) au contact de laquelle vient l'élément de friction (3) lors d'une opération de freinage, un usinage spécifique destiné à l'indication de l'état d'usure du rotor de freinage.

## Description

La présente invention concerne un rotor de freinage dont l'usure peut être contrôlée simplement, sans démontage lourd et sans nécessité d'utilisation d'un outillage spécifique.

En effet, l'évolution des réglementations en matière de contrôle technique des véhicules automobiles tend à systématiser le contrôle de l'état d'usure des éléments de freinage tels que les tambours ou les disques desdits véhicules : il est donc important de disposer de méthodes de contrôle à la fois simples et rapides dans leur mise en oeuvre, peu onéreuses, et fournissant des résultats fiables.

On connaît de nombreuses méthodes permettant de contrôler l'usure de certains éléments d'un système de freinage d'un véhicule automobile. Ces méthodes ne concernent toutefois essentiellement que le contrôle de l'état d'usure des matériaux de friction placés sur les garnitures des éléments venant au contact du rotor de freinage (disque ou tambour) lors des opérations de freinage, qu'il s'agisse de méthodes basées sur la mise en place, sur lesdites garnitures, de matériaux colorés dont l'usure produira des poussières colorées facilement visibles (voir, par exemple, et de manière non exhaustive, les documents GB 2047827, GB 2376276, ou EP 0693635), ou qu'il s'agisse de méthodes basées sur la mise en place, à l'intérieur desdites garnitures, d'un élément conducteur destiné à établir un contact électrique avec ledit rotor de freinage une fois la limite d'usure desdites garnitures atteinte, ledit contact électrique déclenchant ensuite une alerte au niveau du poste de conduite dudit véhicule (voir, par exemple et de manière non exhaustive, les documents EP 1344955, GB 2086501, US 4318457, ou US 4606434).

On connaît également des méthodes permettant de corriger automatiquement l'usure desdites garnitures de frein et applicables à des dispositifs de freinage à tambour ou à disque (voir, par exemple et de manière non exhaustive les documents EP 0317302, EP 0518396, ou US 6213258), mais, là encore, ces méthodes ne permettent pas le contrôle de l'usure dudit rotor de freinage, qu'il s'agisse d'un tambour ou d'un disque.

Une méthode bien connue dans l'état de la technique et permettant de contrôler l'usure du rotor d'un système de freinage (tambour ou disque) consiste à démonter la roue sur laquelle est montée ledit rotor, puis démonter ledit rotor, puis, à l'aide d'un instrument de précision (par exemple et de manière non limitative : un palmer), à mesurer l'épaisseur dudit rotor en plusieurs points afin d'en déterminer l'état d'usure. Cette méthode implique toutefois un ensemble d'opérations relativement lourdes sur le véhicule, rendant sa mise en oeuvre peu envisageable dans le cadre d'une systématisation du contrôle de l'état d'usure desdits rotors imposée par les nouvelles réglementations évoquées précédemment.

La présente invention a pour but de proposer un rotor (tambour ou disque) pour un système de freinage d'un véhicule automobile, dont l'usure peut être facilement contrôlée visuellement, sans nécessiter l'emploi d'instruments spécifiques, et sans nécessiter de démontage important sur ledit véhicule.

L'invention atteint son but grâce à un dispositif de freinage comportant notamment au moins un rotor de freinage, au moins un élément de friction placé sur au moins un segment, et des moyens d'application appropriés permettant, lors d'une action de freinage, la mise en contact dudit au moins un élément de friction avec une surface dudit rotor de freinage, lesdits moyens d'application étant par ailleurs conçus de manière à inclure des moyens de rappel élastiques appropriés permettant d'écarter ledit au moins un élément de friction de ladite surface dudit rotor de freinage à l'issue de ladite action de freinage, ledit dispositif de freinage comprenant en outre des moyens appropriés pour l'ajustement de la course dudit au moins un élément de friction en fonction de l'état d'usure du matériau de friction constituant ledit au moins un élément de friction, ledit dispositif de freinage comportant également au moins un élément de protection destiné notamment à assurer l'étanchéité dudit dispositif de freinage, caractérisé en ce que ledit rotor de freinage comporte, dans un élément de volume délimité par au moins une partie de ladite surface au contact de laquelle vient ledit élément de friction lors d'une opération de freinage, un usinage spécifique destiné à l'indication de l'état d'usure dudit rotor de freinage.

Avantageusement, ledit élément de protection dudit dispositif de freinage comporte au moins un orifice pouvant être obturé par un élément amovible, ledit orifice étant placé de telle sorte qu'il permet, lorsque ledit élément amovible est retiré, un accès visuel direct audit usinage spécifique réalisé dans ledit élément de volume dudit rotor de freinage.

Dans un mode de réalisation préféré de l'invention, ledit rotor de freinage est un tambour de frein et ledit usinage spécifique est un évidement réalisé dans l'épaisseur dudit tambour, à partir de la piste de frottement dudit tambour, parallèlement à l'axe de rotation dudit tambour.

Avantageusement, la profondeur dudit usinage spécifique correspond à l'épaisseur d'usure autorisée pour ledit rotor de freinage.

Avantageusement, l'invention peut également présenter l'une ou l'autre des caractéristiques suivantes :
- ledit usinage spécifique est un ensemble d'un ou plusieurs perçages de ladite profondeur autorisée, réalisés à partir ladite piste de frottement dudit tambour,
- ledit usinage spécifique est un trou réalisé depuis la face extérieure dudit tambour opposée à ladite piste de frottement, ledit trou étant arrêté en profondeur à la cote limite d'usure.

Alternativement, ledit rotor de freinage est un disque, et ledit usinage spécifique est réalisé sur chacune des faces dudit disque.

D'autres caractéristiques et avantages de l'invention ressortiront à la lecture de la description qui suit, en référence aux dessins annexés, dans lesquels :
- la figure 1 est une demi vue partielle en coupe simplifiée, selon un plan diamétral, d'un dispositif de freinage à tambour présentant un mode de réalisation préféré de l'invention,
- la figure 2 est une demi vue partielle en coupe simplifiée, selon un plan diamétral, d'un dispositif de freinage à tambour présentant un mode de réalisation alternatif de l'invention,
- la figure 3 est une demi vue partielle en coupe simplifiée, selon un plan diamétral, d'un dispositif de freinage à tambour présentant un autre mode de réalisation de l'invention.

Dans la description qui suit et pour l'ensemble des figures présentées, l'invention est présentée dans son application à un dispositif de freinage à tambour comportant, notamment et de manière non exhaustive, un tambour 1 sensiblement cylindrique et d'axe de rotation X, ainsi que deux segments 2 (un seul de ces segments est représenté sur les figures) respectivement munis de garnitures 3 de forme adaptée et constituées d'un matériau de friction présentant des propriétés mécaniques appropriées. Ledit tambour 1 étant également muni d'un plateau 4 destiné à protéger lesdits segments 2 et lesdites garnitures 3 ainsi qu'à assurer l'étanchéité du dispositif de freinage dans son ensemble. Lors d'un freinage, des moyens d'application appropriés (non représentés sur les figures) permettent la mise en contact desdites garnitures 3 avec une surface intérieure 5 dudit tambour 1, ladite surface intérieure 5 étant, notamment, définie par une génératrice sensiblement parallèle audit axe de rotation X dudit tambour 1, lesdits segments 2 étant ensuite, à l'issue du freinage, écartés dudit tambour 1 par des moyens élastiques de rappel appropriés (non représentés sur les figures), de manière que le contact entre lesdites garnitures 3 et ladite surface intérieure 5 dudit tambour 1 soit rompu. Dans un mode de réalisation bien connu dans l'état de la technique, lesdits moyens permettant la mise en contact desdites garnitures 3 avec ladite surface intérieure 5, puis l'écartement desdits segments 2, comportent également des moyens appropriés pour l'ajustage de la course desdits segments 2 afin de rattraper l'usure dudit matériau de friction constituant lesdites garnitures 3.

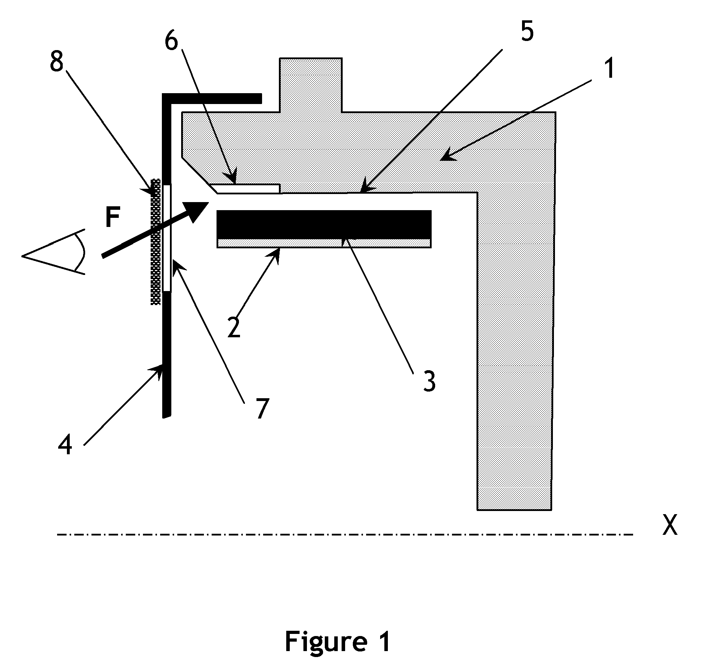

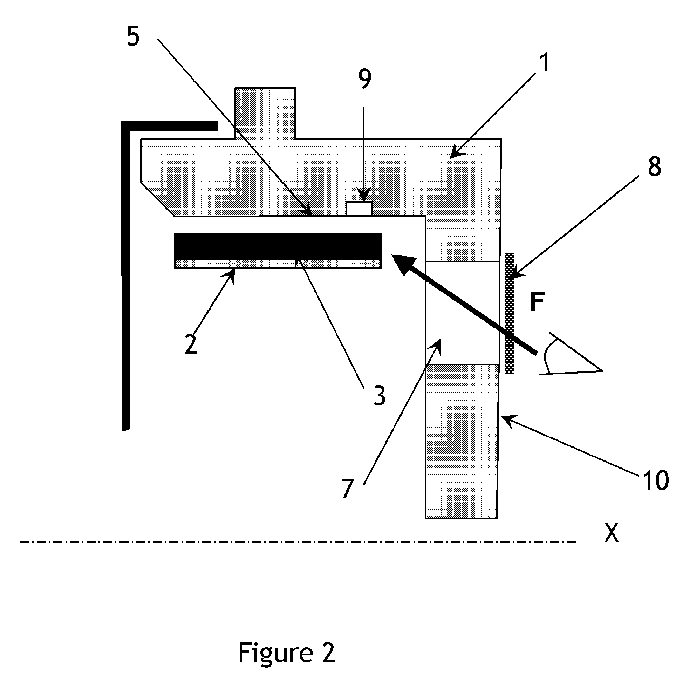

Dans le mode de réalisation préféré de l'invention représenté sur la figure 1, un évidement 6, sensiblement parallèle audit axe de rotation X dudit tambour 1, est usiné, à partir de ladite surface intérieure 5 de contact entre ledit tambour 1 et ladite garniture 3 dudit segment 2, dans l'épaisseur dudit tambour 1. Avantageusement, la profondeur d'usinage dudit évidement 6 est sensiblement égale à l'épaisseur d'usure admise pour ledit tambour 1. Ledit plateau 4 dudit dispositif de freinage à tambour comporte de même un orifice 7 pouvant être obturé par un élément amovible 8 approprié, ledit orifice 7 étant placé de sorte qu'il permet, lorsque ledit élément amovible 8 est retiré, un accès visuel à ladite empreinte 6 réalisée sur ledit tambour 1 : ledit accès visuel est matérialisé par la flèche F sur l'ensemble des figures. Il est à noter que, pour d'autres modes de réalisation de l'invention (voir par exemple le mode de réalisation présenté sur la figure 2), ledit orifice 7 peut être placé en tout autre point du dispositif de freinage ou de son enveloppe, la seule nécessité étant que ledit orifice 7 permette, une fois ledit élément amovible 8 retiré, un accès visuel audit usinage spécifique destiné à l'indication de l'état d'usure dudit rotor de freinage.

Lors des opérations de contrôle de l'usure dudit tambour 1, il est possible, en retirant ledit élément amovible 8 permettant l'obturation dudit orifice 7, de visualiser ladite empreinte 6, la limite autorisée d'usure dudit tambour 1 étant atteinte lorsque ladite empreinte 6 ne peut plus être distinguée de ladite surface intérieure 5 de contact entre ledit tambour 1 et lesdites garnitures 3.

Alternativement, et ainsi que présenté sur la figure 2, un ou plusieurs perçages 9 sont réalisés, en lieu et place dudit évidement 6, dans l'épaisseur dudit tambour 1, à partir de ladite surface intérieure 5 de contact entre ledit tambour 1 et lesdites garnitures 3, l'axe de chacun desdits perçages étant sensiblement perpendiculaire à l'élément de ladite surface intérieure 5 à partir duquel il est percé, et la profondeur desdits perçages 9 étant sensiblement égale à l'épaisseur d'usure autorisée pour ledit tambour 1. Ainsi que le montre la figure 2, ledit orifice 7 permettant l'accès visuel auxdits perçages 9 peut alors être placé, par exemple, sur le voile 10 dudit tambour 1.

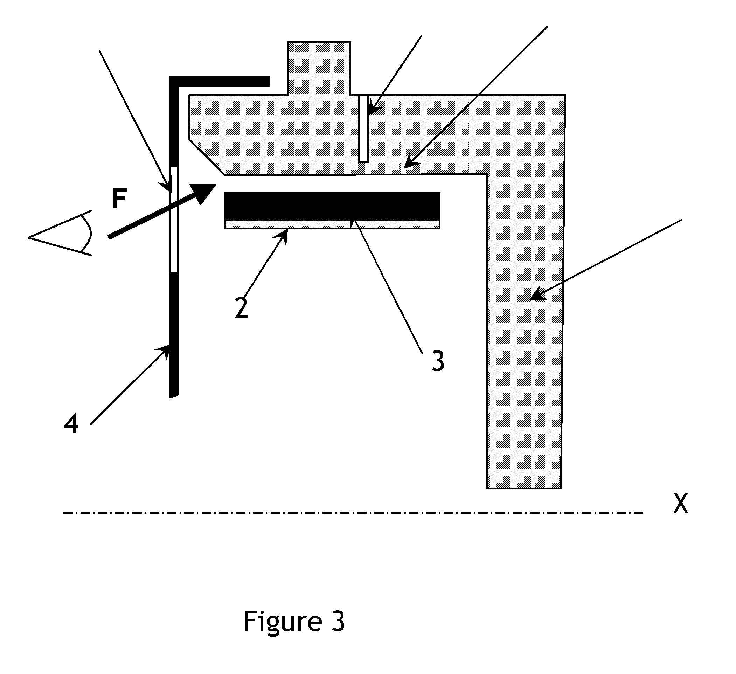

Dans le mode de réalisation présenté sur la figure 3, ledit usinage spécifique permettant l'indication de l'état d'usure dudit tambour 1 est un trou 11 percé à partir d'un élément de la face cylindrique extérieure dudit tambour 1 opposée à ladite surface intérieure 5. L'axe dudit trou 11 est sensiblement perpendiculaire à l'élément de surface de ladite face cylindrique extérieure dudit tambour 1 sur lequel ledit trou 11 est percé, et la profondeur dudit trou 11 est, par ailleurs, définie de sorte que la différence entre l'épaisseur dudit tambour 1 au voisinage dudit trou 11 et ladite profondeur dudit trou 11 est sensiblement égale à l'épaisseur d'usure autorisée pour ledit tambour 1. Ainsi, lorsque la limite d'usure dudit tambour 1 est atteinte, ledit trou 11 devient débouchant sur ladite surface intérieure 5 de contact entre ledit tambour 1 et ladite garniture 3.

Quel que soit le mode de réalisation de l'invention choisi, il apparaît que l'état d'usure dudit tambour 1 du système de freinage à tambour considéré peut être visualisé simplement sans nécessiter l'utilisation d'un quelconque outillage spécifique, et sans démontage lourd d'éléments du véhicule. Selon le mode de réalisation choisi, le seul démontage à réaliser est, éventuellement, celui de la roue dont on veut vérifier l'état d'usure du tambour de frein, opération de démontage simple, rapide, et facilement envisageable dans le cadre d'une opération courante de contrôle technique d'un véhicule.

Par ailleurs, ainsi qu'il a été mentionné plus haut, le système selon l'invention peut également être appliqué à un dispositif de freinage dans lequel le rotor de freinage est un disque et dans lequel lesdites garnitures 3 sont appliquées sur les deux faces opposées dudit disque. Dans ce cas, ledit usinage spécifique selon l'invention sera réalisé sur les deux dites faces dudit disque afin d'en vérifier l'état d'usure. Un tel dispositif présente alors, en outre, l'avantage de permettre de distinguer, le cas échéant, une usure différentielle des deux dites faces dudit disque, usure différentielle qu'il n'est, actuellement, par les méthodes couramment utilisées, que difficilement possible de distinguer avec précision.

## Revendications

1. Dispositif de freinage comportant notamment au moins un rotor de freinage (1), au moins un élément de friction (3) placé sur au moins un segment (2), et des moyens d'application appropriés permettant, lors d'une action de freinage, la mise en contact dudit au moins un élément de friction (3) avec une surface (5) dudit rotor de freinage (1), lesdits moyens d'application étant par ailleurs conçus de manière à inclure des moyens de rappel élastiques appropriés permettant d'écarter ledit au moins un élément de friction (3) de ladite surface (5) dudit rotor de freinage (1) à l'issue de ladite action de freinage, ledit dispositif de freinage comprenant en outre des moyens appropriés pour l'ajustement de la course dudit au moins un élément de friction (3) en fonction de l'état d'usure du matériau de friction constituant ledit au moins un élément de friction (3), ledit dispositif de freinage comportant également au moins un élément de protection (4) destiné notamment à assurer l'étanchéité dudit dispositif de freinage, **caractérisé en ce que** ledit rotor de freinage (1) comporte, dans un élément de volume délimité par au moins une partie de ladite surface (5) au contact de laquelle vient ledit élément de friction (3) lors d'une opération de freinage, un usinage spécifique destiné à l'indication de l'état d'usure dudit rotor de freinage.

2. Dispositif selon la revendication 1, **caractérisé en ce que** ledit élément (4) comporte un orifice (7) permettant un accès visuel audit usinage spécifique.

3. Dispositif selon l'une ou l'autre des revendications 1 ou 2, **caractérisé en ce que** ledit orifice (7) est muni d'un obturateur (8) amovible afin de maintenir l'étanchéité dudit dispositif de freinage.

4. Dispositif de freinage selon l'une quelconque des revendications 1 à 3, **caractérisé en ce que** la profondeur dudit usinage spécifique est sensiblement égale à l'épaisseur maximale d'usure dudit rotor de freinage (1) autorisée par la réglementation en vigueur.

5. Dispositif selon l'une quelconque des revendications 1 à 4, dans lequel ledit rotor de freinage (1) est un tambour de forme sensiblement cylindrique et ladite surface (5) est une piste intérieure de frottement dudit tambour, **caractérisé en ce que** ledit usinage spécifique est un évidement (6) usiné, à partir de ladite surface intérieure (5), dans l'épaisseur dudit rotor de freinage (1), sensiblement parallèlement à l'axe de rotation (X) dudit rotor de freinage (1).

6. Dispositif de freinage selon l'une quelconque des revendications 1 à 4, dans lequel ledit rotor de freinage (1) est un tambour et ladite surface (5) est une piste intérieure de frottement dudit tambour, **caractérisé en ce que** ledit usinage spécifique est un ensemble d'au moins un perçage (9) réalisé dans l'épaisseur dudit rotor de freinage (1), à partir de ladite surface intérieure (5), sensiblement perpendiculairement à ladite surface (5).

7. Dispositif de freinage selon l'une quelconque des revendications 1 à 3, dans lequel ledit rotor de freinage (1) est un tambour et ladite surface (5) est une piste intérieure de frottement dudit tambour, **caractérisé en ce que** ledit usinage spécifique est un trou (11) réalisé dans l'épaisseur dudit tambour 1, à partir de la face extérieure dudit rotor de freinage (1) opposée à ladite surface intérieure (5).

8. Dispositif de freinage selon l'une quelconque des revendications 1 à 3, 7, **caractérisé en ce que** la profondeur dudit trou (11) est sensiblement égale à la différence entre l'épaisseur dudit rotor de freinage (1) au voisinage dudit trou (11) et l'épaisseur maximale d'usure dudit rotor de freinage (1) autorisée par la réglementation en vigueur.

9. Dispositif de freinage selon l'une quelconque des revendications 1 à 4, dans lequel ledit rotor de freinage (1) est un disque, **caractérisé en ce que** ledit usinage spécifique est réalisé sur chacune des faces de frottement dudit rotor de freinage (1).

10. Dispositif selon l'une quelconque des revendications 1 à 4, 9, dans lequel ledit rotor de freinage (1) est un disque, **caractérisé en ce que** ledit usinage spécifique est un évidemment radial réalisé sur chacune desdites faces de frottement dudit rotor de freinage (1).

11. Dispositif selon l'une quelconque des revendications 1 à 4, 9, dans lequel ledit rotor de freinage (1) est un disque, **caractérisé en ce que** ledit usinage spécifique est un ensemble d'au moins un trou réalisé sur chacune desdites faces de frottement dudit rotor de freinage (1), perpendiculairement à la surface de chacune desdites faces de frottement dudit rotor de freinage (1).

12. Véhicule équipé d'un dispositif de freinage selon l'une quelconque des revendications 1 à 11.
